# EUROPÄISCHE PATENTSCHRIFT

(11) **EP 1 037 703 B1**
(45) Veröffentlichungstag und Bekanntmachung des Hinweises auf die Patenterteilung: **28.05.2003**
(21) Anmeldenummer: 98962431.7
(22) Anmeldetag: 09.12.1998
(51) Int. Cl.: B01J 2/20, B30B 11/22, B29B 9/06

(54) **VERWENDUNG EINER EXTRUSIONSVORRICHTUNG**
USE OF AN EXTRUSION DEVICE
L'UTILISATION D'UN DISPOSITIF D'EXTRUSION

(30) Priorität: 10.12.1997 DE 19754873
(43) Veröffentlichungstag der Anmeldung: 27.09.2000
(73) Patentinhaber: BASF AKTIENGESELLSCHAFT, 67056 Ludwigshafen (DE)
(72) Erfinder: KLEINKE, Andreas, D-67063 Ludwigshafen (DE); FARWERCK, Karl-Peter, D-67551 Worms (DE); JOCHUM, Alfons, D-67069 Ludwigshafen (DE); LANGE, Armin, D-69121 Heidelberg (DE); KRULL, Harald, D-67071 Ludwigshafen (DE); ROSENBERG, Jörg, D-67158 Ellerstradt (DE); MAIER, Werner, D-67105 Schifferstadt (DE); JOTTER, Karl, Ludwig, D-67454 Hassloch (DE); TRAPP, Burkhard, D-67105 Schifferstadt (DE); BREITENBACH, Jörg, D-68199 Mannheim (DE)
(74) Vertreter: Kinzebach, Werner, Dr.
(86) Internationale Anmeldenummer: EP9808002
(87) Internationale Veröffentlichungsnummer: WO99029410

(56) Entgegenhaltungen:
- EP-A- 0 694 380
- WO-A-96/24484
- CH-A- 615 384
- FR-A- 2 347 169
- GB-A- 638 992
- GB-A- 674 648
- US-A- 1 946 740
- US-A- 2 583 600
- US-A- 3 976 799

## Beschreibung

Die Erfindung betrifft die Verwendung einer eine rExtrusionsvorrichtung, insbesondere eine Extrusionsvorrichtung für thermoplastische oder teigartige Massen oder für hochzähe Schmelzen, zur Herstellung von wirkstoffhaltigen Polymergranulaten, ausgewählt aus der Gruppe bestehend aus pharmazeutischen Granulaten, Pflanzenbehandlungsmitteln, Futtermittelzusatzstoffen und -zusätzen und Nahrungsmittelzusätzen.

Bekannte Extrusionsvorrichtungen weisen meist ein im wesentlichen zylindrisches Gehäuse auf, in welchem mindestens eine Förderschnecke angeordnet ist. In der Nähe des einen Endes der Förderschnecke weist das Gehäuse einen Einlaß auf, durch den die Extrusionsvorrichtung mit der zunächst meist in Pulver- oder Granulatform vorliegenden, zu extrudierenden Nasse beschickt werden kann. Die Förderschnecke wird durch eine Motorwelle angetrieben. Die Stirnseite des Gehäuses weist in der Nähe des antriebsfernen Endes der Förderschnecke eine Austrittsöffnung auf. Häufig ist die Extrusionsvorrichtung abschnittsweise temperierbar. Die zu extrudierende Masse wird während des Transports mit der Förderschnecke aufgeschmolzen, vermischt und anschließend durch die Austrittsöffnung gepreßt, wo sie in Form eines kontinuierlichen Strangs austritt. Die Austrittsöffnung kann beispielsweise als Lochplatte oder Lochleiste mit einer Vielzahl feiner Öffnungen ausgebildet sein, die entsprechend feine Produktstränge erzeugen.

Derartige Extrusionsvorrichtungen können beispielsweise zur Herstellung von Granulaten verwendet werden. Ein besonders wichtiger Anwendungsbereich ist dabei die Herstellung von pharmazeutischen Granulaten durch Schmelzextrusion. Der Einsatz einer Extrusionsvorrichtung im pharmazeutischen Bereich ist beispielsweise in US 4,880,585 beschreiben. Dabei werden in der Extrusionsvorrichtung ein polymeres Bindemittel und der eigentliche pharmazeutische Wirkstoff ggf. zusammen mit weiteren Additiven aufgeschmolzen, miteinander vermischt und durch die Lochplatte der Extrusionsvorrichtung in Form zahlreicher kontinuierlicher Produktstränge ausgepreßt. Unmittelbar nach der Extrusionsvorrichtung ist eine Granuliereinrichtung angeordnet, beispielsweise eine sogenannte Heißabschlagvorrichtung, welche die aus dem Extruder austretenden kontinuerlichen Produktstränge mit rotierenden Messern in kleine zylinderförmige Stücke (Granulate) zerteilt, die dann in eine Sammeleinrichtung fallen. Die Granulate sind zu diesem Zeitpunkt noch thermoplastisch verformbar und können daher ihre Form während im Fallen oder in der Sammeleinrichtung ändern. Durch Prozeßführung kann man beispielsweise eine Abrundung der Kanten des zylinderförmigen Granulats erreichen, so daß sogenannte Pellets entstehen.

Wirkstoffhaltige Granulate bzw. Pellets stellen interessante Formulierungsvarianten zu herkömmlichen Formulierungen dar. Sie können beispielsweise als Futtermittelzusätze oder als Pflanzenbehandlungsmittel unmittelbar verwendet werden. Auch im pharmazeutischen Bereich ist eine unmittelbare Einnahme von Wirkstoffen in Granulatform denkbar. In der Pharmazie werden Granulate und Pellets jedoch häufiger in Kapseln abgefüllt oder konventionell zu Tabletten verpreßt. Besonders interessant ist dabei die Möglichkeit, inkompatible Wirkstoffe durch Mischen der verschiedenen Granulate oder Pellets in einer einzigen Darreichungsform, etwa als Kapsel oder Tablette, anbieten zu können. Granulate und Pellets besitzen außerdem den Vorteil, daß eine staubfreie Weiterverarbeitung ermöglicht wird.

Mit der herkömmlichen Herstellung von Granulaten durch Extrusion der Schmelze und anschließenden Heißabschlag sind jedoch Probleme verbunden. Nach dem zerkleinern durch die Messer der Abschlagvorrichtung ist das Granulat noch heiß und thermoplastisch verformbar. Treffen Granulatpartikel zu diesem Zeitpunkt aufeinander oder auf eine Gerätewandung, so kommt es zu einem Verkleben oder Zusammenbacken, was letztlich dazu führt, daß der Extruder und der Heißabschlag abgestellt und die Geräte gereinigt werden müssen. Anschließend muß der Herstellungsprozeß wieder angefahren werden.

Das Zusammenbacken und Verkleben der Partikel kann letztlich nur durch ein Absenken der Temperatur der extrudierten Produktstränge verhindert werden. Eine Erniedrigung der Temperatur der Extrudatmasse kann beispielsweise durch ein Absenken der Extrudertemperatur, insbesondere im Bereich der Lochplatte, oder - bei unveränderter Extrudertemperatur - durch eine Erhöhung des Durchsatzes am Extruder erreicht werden. Mit sinkender Temperatur verändern sich jedoch die Fließeigenschaften der polymeren Schmelze. Insbesondere kommt es zu einem Anstieg der Viskosität der Schmelze, so daß in der Folge einige Löcher der Lochplatte verstopfen können. Dieses Problem stellt sich insbesondere bei der Herstellung von pharmazeutischen Granulaten, wo im Produktionsmaßstab Lochplatten mit typischerweise 50-500 Löchern verwendet werden, wobei die Löcher üblicherweise Durchmesser im Bereich von 0,5 bis einigen Millimetern besitzen. Durch das Verstopfen von einzelnen Löchern kommt es zu einem ungleichmäßigen Massenstrom, wobei ein hoher Massenstrom bei freien Löchern zu einer Erwärmung der Schmelze durch Scherung führt, während bei nahezu verstopften Löchern und dementsprechend geringem Massenstrom eine Abkühlung der Schmelze durch Abstrahlung auftritt. Dies führt zu unterschiedlichen Granulatgrößen, wobei insbesondere die an Löchern mit hohem Durchsatz entstandenen großen, heißen Granulate zum Verkleben neigen und die an Löchern mit geringem Durchsatz entstandenen kleinen Granulatteilchen zu einer Erhöhung des Feinanteils der Produktion führen. Auch hier muß schließlich der Herstellungsprozeß abgeschaltet und eine Reinigung der Geräte durchgeführt werden.

Die US. 2,583,600 beschreibt eine Extrusionsvorrichtung zur Futterherstellung, wobei die Vorrichtung eine drehbare Schneidvorrichtung angrenzend an die Lochplatte aufweist. Die US 3,976,799 beschreibt Extrusionsvorrichtungen zur Herstellung von Tierfutter aus rohem Fleisch und getrockneten, gekochten Zeralien. Die Vorrichtung weist ein Abstreiforgan auf, das elastisch gegen die Innenseite der Austrittsöffnung gepresst ist. Weder in der US 2,583,600 noch in der US 3,976,799 werden wirkstoffhaltige Polymerschmelzen angesprochen.

In der CH-A 615 384 wird eine Extrusionsvorrichtung mit auf der Innenseite der Düsenplatte angeordnetem Messerring beschrieben. Allerdings sind die Messer nicht elastisch gegen die Innenseite der Düsenöffnung gepresst. Die Vorrichtung wird zur Extrusion von Polyesterharzen oder Phenolharzen verwendet. Der CH-A 615 384 lässt sich ebenfalls kein Hinweis entnehmen, dass die Vorrichtung zur Extrusion von wirkstoffhaltigen Polymerschmelzen geeignet ist.

Der vorliegenden Erfindung liegt daher das Problem zugrunde, eine Extrusionsvorrichtung anzugeben, mit welcher insbesondere thermoplastische oder teigartige Massen oder hochzähe Schmelzen auch durch feine Austrittsöffnungen zuverlässig extrudiert werden können. Die Vorrichtung soll sich dabei insbesondere zur Herstellung von Granulaten oder Pellets eignen, wobei die Temperatur der Produktstränge verglichen mit herkömmlichen Extrusionsvorrichtungen niedriger sein sollte, so daß ein Verkleben der Granulate oder Pellets sowohl untereinander als auch mit der Wandung der Extrusionsvorrichtung nach dem Heißabschlag zuverlässig verhindert wird.

Gelöst wird dieses Problem durch die Verwendung einer Extrusionsvorrichtung mit einem Gehäuse (11), mindestens einer in dem Gehäuse angeordneten Förderschnecke (12) und einer an der Stirnseite das Gehäuses (11), in der Nähe des antriebsfernen Endes (14) jeder Förderschnecke angeordneten Austrittsöffnung (20), wobei zwischen dem antriebsfernen Ende (14) jeder Förderschnecke (12) und der Austrittsöffnung (20) mindestens ein, die Innenseite der Austrittsöffnung (20) überstreichendes Abstreiforgan (21) angeordnet ist, das elastisch gegen die Innenseite der Austrittsöffnung (20) gepreßt ist, zur Herstellung von wirkstoffhaltigen Polymergranulaten, ausgewählt aus der Gruppe bestehend aus pharmazeutischen Granulaten, Pflanzenbehandlungsmitteln, Futtermittelzusatzstoffen und -zusätzen und Nahrungsmittelzusätzen.

Mit der erfindungsgemäß verwendeten Extrusionsvorrichtung wird die zu extrudierende Masse, beispielsweise ein polymeres Bindemittel, ein pharmazeutischer Wirkstoff und weitere Additive zunächst in herkömmlicher Weise aufgeschmolzen und beim Transport durch die Förderschnecke miteinander vermischt. Brauchbare Wirkstoffe, Bindemittel und Additive sind beispielsweise aus DE 195 39 363 A1 bekannt. Die Schmelze wird durch eine Austrittsöffnung extrudiert und das Extrudat schließlich in einzelne Granulatpartikel zerkleinert. Im Gegensatz zur herkömmlichen Strangextrusion wird die Extrudatmasse jedoch nicht durch den im Extrudat erzeugten Druck ausgetragen, sondern durch ein spezielles Abstreiforgan durch die Austrittsöffnung der Extrusionsvorrichtung gefördert. Die erfindungsgemäß verwendete Vorrichtung unterscheidet sich daher von bekannten Extrusionsvorrichtungen lediglich durch das zusätzliche Abstreiforgan, so daß sie nicht wesentlich teurer in der Herstellung ist und auch bereits vorhandene Extrusionsvorrichtungen einfach mit dem durch die Erfindung vorgeschlagenen Abstreiforgan nachgerüstet werden können. Eine solche Nachrüstung ist vorallem deshalb relativ einfach realisierbar, weil auch bei herkömmlichen Extrusionsvorrichtungen die Förderschnecke nicht direkt bis an die Austrittsöffnung, beispielsweise die Lochplatte, reicht, sondern praktisch immer ein Zwischenraum vorgesehen ist, in welchem nun das durch die Erfindung vorgeschlagene Abstreiforgan angeordnet werden kann.

Mit der erfindungsgemäß verwendeter Vorrichtung sind zahlreiche Vorteile verbunden. Die Temperatur der Etrudatmasse und/oder der Austrittsöffnung des Extruders kann soweit abgesenkt werden, daß ein Verkleben oder zusammenbacken des zerkleinerten Granulats zuverlässig vermieden wird. Anders als bei herkömmlichen Extrusionsvorrichtungen führt jedoch die Absenkung der Temperatur der Extrudatmasse, trotz angestiegener Viskosität des Extrudats, nicht zu einem Verstopfen der Löcher der Austrittsöffnung. Ein solches Verstopfen wird vielmehr durch das kontinuerliche Abstreifen der Innenseite der feinen Löcher der Austrittsöffnung zuverlässig verhindert. Da das Abstreiforgan nur auf die unmittelbar an der Innenseite der Austrittsöffnung befindliche Extrudatmasse wirkt, kommt es praktisch zu keinem zusätzlichen Energieeintrag in die Schmelze, so daß auch keine unerwünschte Temperaturerhöhung durch den Fördervorgang selbst stattfindet. Mit der erfindungsgemäß verwendeter Vorrichtung lassen sich sogar Teigmassen und hochzähe Schmelzen auch bei Verwendung von Lochplatten mit sehr kleinen Lochdurchmessern problemlos extrudieren. Üblicherweise werden dazu die optimalen Prozeßparameter mit einem Extruder im Labormaßstab mit 1-5 Löchern ermittelt. Ein scale-up auf einen industriellen Produktionsmaßstab mit einigen hundert Löchern bringt dabei keine zusätzlichen Probleme mit sich.

Durch die Extrusion bei vergleichsweise niedriger Temperatur wird das Anwendungsspektrum der Schmelzextrusion deutlich erweitert. Beispielsweise lassen sich nun auch wirkstoffhaltige Schmelzen extrudieren, die hitzeempfindliche Bestandteile enthalten, welche bei den in herkömmlichen Extrudern verwendeten Temperaturen geschädigt würden.

Um dem unvermeidlichen Spiel der einzelnen Bauteile der Extrusionsvorrichtung und möglichen Temperatur- und Druckänderungen im laufenden Prozeß, insbesondere aber beim Anfahren des Extrusionsprozesses Rechnung zu tragen, ist das Abstreiforgan elastisch gegen die Innenseite der Austrittsöffnung gepreßt. Dies kann beispielsweise durch eine auf das Abstreiforgan wirkende Druckfeder erreicht werden.

Vorteilhaft ist das Abstreiforgan drehfest mit der zugeordneten Förderschnecke verbunden, so daß die Innenseite der Austrittsöffnung kontinuierlich abgestreift wird. Beispielsweise kann das Abstreiforgan einen Schaft aufweisen, der auf der Spitze der Förderschnecke befestigt ist. Die Förderschnecke weist dazu bevorzugt eine Ausnehmung auf, in welche dieser Schaft drehfest eingreift. Zwischen dem Boden der Ausnehmung und dem Schaft des Abstreiforgans kann die oben erwähnte Druckfeder angeordnet sein. Die erfindungsgemäß verwendete Vorrichtung läßt sich daher durch eine einfache Modifikation der Spitze der Förderschnecke einer herkömmlichen Extrusionsvorrichtung realisieren.

Die erfindungsgemäß verwendete Vorrichtung arbeitet totraumfrei, so daß keine Gefahr eines Vercrackens der polymeren Wirkstoffschmelze besteht.

Vorteilhaft ist das Abstreiforgan als Passiermesser ausgebildet. Das Messer kann dabei beispielsweise aus einem gehärteten Material, vorzugsweise einem gehärteten Metall bestehen.

Die Austrittsöffnung des Extruders ist vorteilhaft als Lochplatte ausgebildet, wobei die Lochplatte typischerweise zwischen 50 und 500 Löchern aufweist, deren Durchmesser im Bereich von 0,5 - 10 mm liegt. Die Lochplatte selbst ist vorteilhaft temperierbar.

Handelt es sich bei dem Extruder beispielsweise um einen Doppelwellenextruder, so ist jeder Welle bevorzugt ein separates Abstreiforgan zugeordnet.

Die erfindungsgemäß verwendete Vorrichtung eignet sich zur Herstellung von wirkstoffhaltigen Polymergranulaten, wobei der Extrusionsvorrichtung dann Granuliereinrichtung, etwa eine Abschlageinrichtung mit rotierenden Messern, nachgeordnet ist.. Die erfindungsgemäß verwendete Vorrichtung wird zur Herstellung von wirkstoffhaltigen Polymergranulaten, ausgewählt aus der Gruppe bestehend aus pharmazeutischen Granulaten, Pflanzenbehandlungsmitteln, Futtermittelzusatzstoffen und -zusätzen und Nahrungsmittelzusätzen verwendet.

Die vorliegende Erfindung wird im folgenden anhand eines unter Bezugnahme auf die beigefügte Zeichnung dargestellten Ausführungsbeispiels ausführlicher beschrieben.

In der Zeichnung zeigt:
- Figur 1: einen axialen Teilquerschnitt einer ersten Ausführungsform der erfindungsgemäße verwendeten Extrusionsvorrichtung;
- Figur 2: eine Stirnansicht einer zweiten, als Doppelwellenextruder ausgebildeten Ausführungsform der erfindungsgemäß verwendeten Extrusionsvorrichtung im Teilausriß.

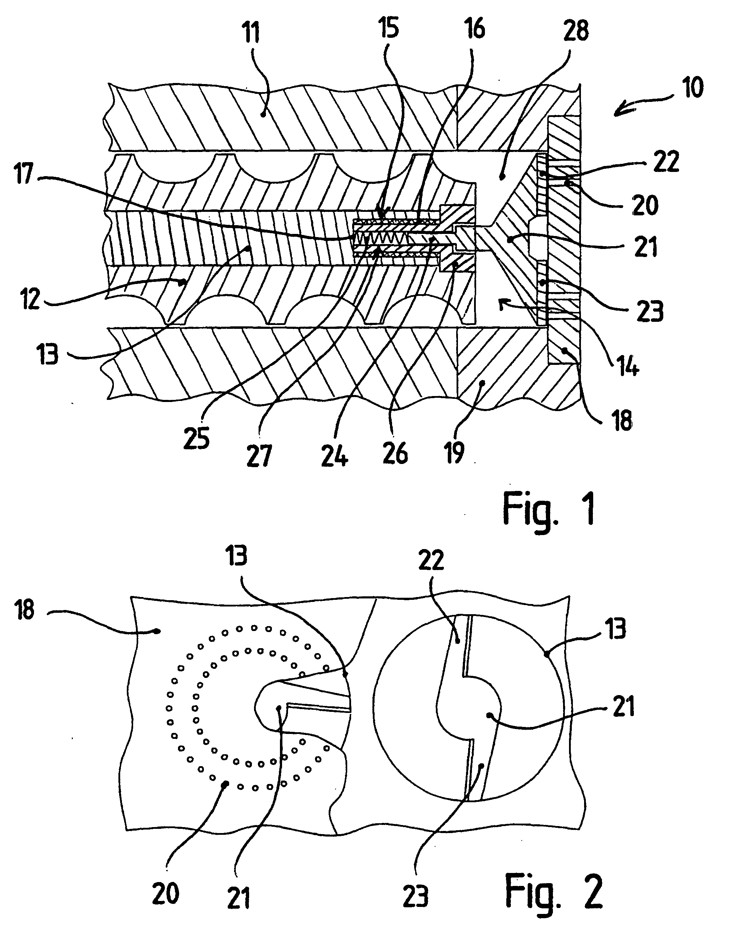

In Figur 1 ist eine bevorzugte Ausführungsform der erfindungsgemäß verwendeten Extrusionsvorrichtung im Teilquerschnitt dargestellt. Wie eine herkömmliche Extrusionsvorrichtung auch, umfaßt der erfindungsgemäß verwendete Extruder 10 ein zylindrisches Schneckengehäuse 11, in dessen Innerem eine Förderschnecke 12 drehbar angeordnet ist. Die Schneckenwelle 13 der Förderschnecke 12 endet vor einer Lochplatte 18 in einer wellenspitze 14. Die temperierbare Lochplatte 18 ist in einem Lochplattenhalter 19 angeordnet und bildet den stirnseitigen Abschluß des Extruders 10. In der Lochplatte 18 sind Öffnungen 20 ausgespart, durch welche die Förderschnecke 12 das schmelzflüssige Extrudat fördert. Nicht dargestellt sind die von herkömmlichen Extrudern bekannten Beschickungseinrichtungen, mit denen beispielsweise ein pulverförmiges polymeres Bindemittel und ein pulverförmiger Wirkstoff dem Extruder zugeführt werden können, welche dann durch (ebenfalls nicht dargestellte) Heizelemente zu der extrudierbaren Schmelze aufgeschmolzen werden. Die Förderschnecke 12 dient dabei gleichzeitig als Mischorgan zum homogenen Durchmischen der einzelnen Bestandteile der Schmelze.

Zur Herstellung von pharmazeutischen Granulaten weisen die Öffnungen 20 in der Lochplatte 18 einen Durchmesser von nur wenigen mm auf. Die Lochplatte 18 kann einige 100 Öffnungen 20 besitzen.

In der Wellenspitze 14 der Förderschnecke 12 ist ein als Passiermesser 21 ausgebildetes Abstreiforgan drehfest verankert. Im dargestellten Beispiel weist das Passiermesser 21 zwei im wesentlichen diametral gegenüberliegende Messerflügel 22,23 auf. Der Messerschaft 24 des Passiermessers 21 ist mit einer Befestigungsschraube 26 in einer in der Wellenspitze 14 ausgesparten Bohrung 15 gehalten. Die Bohrung weist ein Innengewinde 16 auf, das mit einem komplementären Außengewinde der Befestigungsschraube 26 zusammenwirkt. Am Boden der zentralen Ausnehmung 27 der Befestigungsschraube 26 ist eine Kompressionsfeder angeordnet, die gegen den Schaft 24 des Passiermessers 21 wirkt und dieses gegen die Innenseite der Lochplatte 18 drückt.

In Figur 2 ist eine Teildarstellung einer Stirnansicht einer zweiten Ausführungsform des erfindungsgemäß verwendeten Extruders 10 gezeigt. Bei der in Figur 2 dargestellten Variante handelt es sich um einen Doppelwellenextruder, wobei jede der beiden Förderschnecken 12 mit einem Passiermesser 21 versehen ist. Die Lochplatte 18 mit darin kreisförmig angeordneten Öffnungen 20 ist im Teilausriß dargestellt.

Zur Durchführung des erfindungsgemäßen Verfahrens wird der Extruder 10 in herkömmlicher Weise mit polymerem Bindemittel und Wirkstoff beschickt, diese Bestandteile vermischt und aufgeschmolzen und durch die Förderschnecke 12 in den von der Wellenspitze 14 und der Lochplatte 18 begrenzten Zwischenraum 28 gefördert. Das in diesem Zwischenraum 28 rotierende Passiermesser 21 drückt das Extrudat durch die Öffnungen 20 der Lochplatte 18 und verhindert so daß Verstopfen dieser Öffnungen auch dann, wenn die Temperatur des schmelzflüssigen Extrudats abgesenkt ist, um ein späteres Verkleben des Granulatteilchen zu verhindern.

Das Extrudat verläßt die Öffnungen 20 in Form eines kontinuerlichen Produktstranges, der durch eine (nicht dargestellte) an sich bekannte Heißabschlagvorrichtung in kleine zylinderförmige Granulatpartikel verkleinert wird. Je nach Prozeßführung können sich die Granulatpartikel in dieser zylinderförmigen Gestalt verfestigen, oder, solange sie noch thermoplastisch verformbar sind, zu Pellets abrunden.

Die Vorteile der erfindungsgemäß verwendeten Extrusionsvorrichtung werden auch durch die im folgenden beschriebene Vergleichsuntersuchung deutlich:

### Beispiele:

Mit einem Zwei-Wellen-Kneter ZSK 40 der Fa. Werner & Pfleiderer wurde folgende Rezeptur verarbeitet:

| Komponente | Gew.% |
|---|---|
| Theophyllin | 50 |
| Eudragit RS | 10 |
| Kollidon VA-64 | 40 |

Zum Abschlag der Schmelzstränge wurde ein Messerwalzengranulator MWG 260/90 Fa. Werner & Pfleiderer benutzt.

### Vergleichsbeispiel 1:

Um einen homogen Austrag aus der Lochleiste (15x1 mm) zu erhalten, wurde folgendes Temperaturprofil auf dem Extruder mit konventioneller Ausführung gefahren:

| | | | | | | |
|---|---|---|---|---|---|---|
| Zone 1 | Zone 2 | Zone 3 | Zone 4 | Zone 5 | Kopf | Düse |
| 105 | 125 | 155 | 155 | 160 | 180 | 180 |

Das Produkt kam gleichmäßig aus der Lochleiste, verklebte jedoch an den Messern und am Gehäuse so stark, daß der Prozeß nach kurzer Laufzeit abgestellt werden mußte.

### Vergleichsbeispiel 2:

Um dem Verkleben entgegenzuwirken, wurde die Verarbeitungstemperatur abgesenkt:

| | | | | | | |
|---|---|---|---|---|---|---|
| Zone 1 | Zone 2 | Zone 3 | Zone 4 | Zone 5 | Kopf | Düse |
| 90 | 110 | 140 | 140 | 150 | 170 | 170 |

Die Verklebungsneigung ging deutlich zurück, der Durchsatz durch die Löcher schwankte aber stark, so daß unterschiedlich große Granulatteilchen erhalten wurden. Nach kurzer Zeit verstopften einzelne Löcher ganz.

### Beispiel 3:

Der Extruder wurde mit dem erfindungsgemäß verwendeten Abstreiforgan versehen. Unter Beibehaltung des in Vergleichsbeispiel 2 beschriebenen Temperaturprofils wurden nichtklebende, gleichförmige Granulatteilchen erhalten. Der Durchsatz durch die einzelen Löcher war sehr gleichmäßig, ein Verstopfen einzelner Löcher trat auch nach längerer Zeit nicht auf.

## Patentansprüche

1. Verwendung einer Extrusionsvorrichtung mit einem Gehäuse (11), mindestens einer in dem Gehäuse angeordneten Förderschnecke (12) und einer an der Stirnseite das Gehäuses (11), in der Nähe des antriebsfernen Endes (14) jeder Förderschnecke angeordneten Austrittsöffnung (20), wobei zwischen dem antriebsfernen Ende (14) jeder Förderschnecke (12) und der Austrittsöffnung (20) mindestens ein, die Innenseite der Austrittsöffnung (20) überstreichendes Abstreiforgan (21) angeordnet ist, das elastisch gegen die Innenseite der Austrittsöffnung (20) gepreßt ist, zur Herstellung von wirkstoffhaltigen Polymergranulaten, ausgewählt aus der Gruppe bestehend aus pharmazeutischen Granulaten, Pflanzenbehandlungsmitteln, Futtermittelzusatzstoffen und -zusätzen und Nahrungsmittelzusätzen.

2. Verwendung gemäß der Anspruch 1, **dadurch gekennzeichnet, daß** das Abstreiforgan (21) drehfest mit der zugeordneten Förderschnecke (12) verbunden ist.

3. Verwendung gemäß einem der Ansprüche 1 oder 2, **dadurch gekennzeichnet, daß** das Abstreiforgan (21) als Passiermesser ausgebildet ist.

4. Verwendung gemäß einem der Ansprüche 1 bis 3, **dadurch gekennzeichnet, daß** die Austrittsöffnung (20) als Lochplatte ausgebildet ist.

5. Verwendung gemäß einem der Ansprüche 1 bis 4, **dadurch gekennzeichnet, daß** der Austrittsöffnung (20) eine Granuliereinrichtung nachgeordnet ist.

## Claims

1. The use of an extrusion arrangement having a housing (11), having at least one screw (12) arranged in the housing and having a die orifice (20) arranged at the front of the housing (11) in the vicinity of the end (14), remote from the drive, of each screw, wherein at least one stripper device (21) sweeping over the inside of the die orifice (20) is arranged between the end (14), remote from the drive, of each screw (12) and the die orifice (20) and is elastically pressed against the inside of the die orifice (20), for producing polymer granules containing active ingredients, chosen from the group consisting of pharmaceutical granules, plant treatment compositions, animal food additives and supplements and human food supplements.

2. The use as claimed in claim 1, wherein the stripper device (21) is connected to rotate with the assigned screw (12).

3. The use as claimed in either of claims 1 or 2, wherein the stripper device (21) is designed as a traversing knife.

4. The use as claimed in any of claims 1 to 3, wherein the die orifice (20) is designed as a perforated plate.

5. The use as claimed in any of claims 1 to 4, wherein a granulating unit is arranged downstream of the die orifice (20).

## Revendications

1. Utilisation d'un dispositif d'extrusion ayant un carter (11), au moins une vis sans fin (12) disposée dans le carter et un orifice de sortie (20) situé sur la face frontale du carter (11), à proximité de l'extrémité (14) opposée à l'entraînement de chaque vis sans fin, tandis qu'est disposé entre l'extrémité opposée à l'entraînement (14) de chaque vis sans fin (12) et l'orifice de sortie (20) au moins un organe de raclage (21), qui est pressé de manière élastique contre la face interne de l'orifice de sortie (20), pour la préparation de granulés de polymère contenant des substances actives, choisis dans le groupe consistant en des granulés pharmaceutiques, des produits pour le traitement des plantes, des adjuvants et additifs pour aliments pour animaux, et des additifs alimentaires.

2. Utilisation selon la revendication 1, **caractérisée par le fait que** l'organe de raclage (21) est solidaire en rotation de la vis sans fin (12) correspondante.

3. Utilisation selon l'une des revendications 1 ou 2, **caractérisée par le fait que** l'organe de raclage (21) a la forme d'une lame tamisante.

4. Utilisation selon l'une des revendications 1 à 3, **caractérisée par le fait que** l'orifice de sortie (20) a la forme d'une plaque perforée.

5. Utilisation selon l'une des revendications 1 à 4, **caractérisée par le fait qu'**une installation de granulation est disposée à la suite de l'orifice de sortie (20).
